# EUROPEAN PATENT SPECIFICATION

(11) **EP 3 366 939 B1**
(45) Date of publication and mention of the grant of the patent: **26.02.2020**
(21) Application number: 17206652.4
(22) Date of filing: 12.12.2017
(51) Int. Cl.: F16D 13/56

(54) **MOTORCYCLE**
MOTORRAD
MOTOCYCLETTE

(30) Priority: 27.02.2017 JP 2017034366
(43) Date of publication of application: 29.08.2018
(73) Proprietor: YAMAHA HATSUDOKI KABUSHIKI KAISHA, Iwata-shi, Shizuoka 438-8501 (JP)
(72) Inventor: HATORI, Takuto, Iwata-shi, Shizuoka 438-8501 (JP)
(74) Representative: Grünecker Patent- und Rechtsanwälte PartG mbB

(56) References cited:
- JP-A- 2015 148 307
- US-A1- 2010 163 361
- US-A1- 2016 333 943

## Description

The present invention relates to a motorcycle.

There is a type of motorcycle including an assist clutch. The assist clutch generates an assist force that enhances a press-contact force between friction plates when a clutch is engaged. This can reduce a force to operate the clutch.

US 2016/333943 A1 discloses vehicle power transmission system which includes a clutch having a friction plate, a clutch plate, and a pressure plate for elastically pressing the friction plate or the clutch plate by a pressure elastic body, a clutch actuator that applies a clutch OFF pressing force to the pressure plate, and a control device. When causing the clutch to shift to a clutch ON state, the control device controls operation of the clutch actuator to make the clutch OFF pressing force less than an elastic force of the pressure elastic body and apply an anti-assist force to the pressure plate. Moreover, for example, a clutch described in Japan Laid-open Patent Application Publication No. 2011-33106 is provided with an assist cam mechanism including an assist cam and a center cam. The assist cam is coupled to a clutch inner assembly. The center cam is coupled to a main shaft. The clutch inner assembly is accommodated in a housing. Each of the clutch inner assembly and the housing includes a friction plate. When the friction plate of the clutch inner assembly and that of the housing are pressed in contact, the clutch becomes an engaged state.

Each of the assist cam and the center cam includes a slant contact surface. When rotation of the main shaft is accelerated in clutch engagement, the contact surface of the assist cam is pressed by that of the center cam due to difference in rotational velocity between the assist cam and the center cam. Accordingly, the assist cam is moved, and this results in increase in pressing force applied by the clutch inner assembly to the clutch plate thereof. As a result, the press-contact force between the friction plates is strengthened.

In the aforementioned assist clutch, the pressing force received by the assist cam from the center cam is utilized to obtain an assist force to strengthen the press-contact force between the friction plates. However, when the pressing force received by the assist cam becomes excessive, a drawback emerges: a feeling arises that the clutch is suddenly engaged in response to operating a clutch lever.

In view of the above, Japan Laid-open Patent Application Publication No. 2011-33106 proposes to set the slant angle of each contact surface to fall in a predetermined angular range as a solution to the aforementioned drawback. However, this solution results in reduction in pressing force received by the contact surface of the assist cam from that of the center cam. Accordingly, a drawback emerges that the assist force is weakened. Contrarily, for inhibiting reduction in assist force, it is required to set the slant angle to increase the pressing force. In this case, a drawback emerges that the feeling of sudden clutch engagement is intensified.

It is an object of the present invention to inhibit arising of a feeling that a clutch is suddenly engaged, and besides, inhibit reduction in assist force, in a motorcycle including an assist clutch. According to the present invention said object is solved by a motorcycle configured to make a turn in a lean posture having the features of independent claim 1. Preferred embodiments are laid down in the dependent claims.

A motorcycle according to an aspect of the present invention includes a drive gear, a housing, a first friction plate, a clutch inner assembly, a second friction plate, an urging member, a main shaft, an assist mechanism, a clutch operating member and a release mechanism. The housing is coupled to the drive gear. The first friction plate is coupled to the housing. The clutch inner assembly is accommodated in the housing, and includes a first plate portion and a second plate portion. The second plate portion is movable in a first axis direction with respect to the first plate portion. The second friction plate is disposed together with the first friction plate between the first plate portion and the second plate portion, and is coupled to the clutch inner assembly. The urging member urges the second plate portion toward the first plate portion such that the first friction plate and the second friction plate are pressed in contact with each other. The main shaft is coupled to the clutch inner assembly. The assist mechanism increases a press-contact force between the first friction plate and the second friction plate when the main shaft is accelerated in rotation. The clutch operating member is provided to be operable by a rider. The release mechanism moves the second plate portion in a direction separating from the first plate portion in response to operating the clutch operating member.

The assist mechanism includes a first cam member and a second cam member. The first cam member is coupled to the main shaft, and includes a first slope. The first slope slants with respect to the first axis direction. The second cam member is coupled to the second plate portion and includes a second slope. The second slope slants in an identical direction to the first slope. The first slope is configured to press the second slope such that the second cam member is moved in the first axis direction when the main shaft is accelerated in rotation. The second plate portion is configured to move toward the first plate portion in conjunction with movement of the second cam member in the first axis direction.

The release mechanism includes a push rod, a release shaft and a coupling member. The push rod extends in the first axis direction. The push rod is coupled to the second plate portion, and is disposed inside the main shaft. The release shaft extends in a second axis direction intersecting with the push rod. The coupling member couples the release shaft and the clutch operating member.

The release shaft is configured to rotate in response to operating the clutch operating member so as to move the push rod in the first axis direction. The release shaft includes a connecting portion, a pressing portion and a first shaft portion. The coupling member is coupled to the connecting portion. The pressing portion is configured to press the push rod while being in contact with the push rod. The first shaft portion is thinner than the connecting portion, and is located between the connecting portion and the pressing portion in the second axis direction.

In the motorcycle according to the present aspect, the release shaft includes the first shaft portion that is thinner than the connecting portion. Therefore, the stiffness of the release shaft is weakened at the first shaft portion. Because of this, slight delay occurs in transmitting an operating force from the clutch operating member to the clutch inner assembly through the release shaft. As a result, it is possible to inhibit arising of a feeling that a clutch is suddenly engaged. Additionally, it is possible to inhibit arising of the feeling of sudden clutch engagement by devising the shape of the release shaft, whereby it is possible to inhibit reduction in assist force.

A dimeter of the first shaft portion may be less than or equal to 90% of a diameter of the connecting portion. The diameter of the first shaft portion may be greater than or equal to 50% of the diameter of the connecting portion.

The first shaft portion may be thinner than the pressing portion. In this case, the stiffness of the release shaft is weakened at the first shaft portion, whereby it is possible to inhibit arising of the feeling of sudden clutch engagement. Additionally, the pressing portion is thicker than the first shaft portion, whereby it is possible to inhibit reduction in strength of the pressing portion.

The diameter of the first shaft portion may be less than or equal to 90% of a diameter of the pressing portion. The diameter of the first shaft portion may be greater than or equal to 50% of the diameter of the pressing portion.

The motorcycle may further include a support member and a bearing. The support member may support the release shaft. The bearing may be disposed between the support member and the release shaft. The release shaft may further include a second shaft portion. The second shaft portion may be located between the connecting portion and the first shaft portion in the second axis direction. The second shaft portion may be rotatably supported by the bearing. The first shaft portion may be thinner than the second shaft portion. In this case, the stiffness of the release shaft is weakened at the first shaft portion, whereby it is possible to inhibit arising of the feeling of sudden clutch engagement. Additionally, the second shaft portion is thicker than the first shaft portion, whereby it is possible to inhibit reduction in strength of the second shaft portion.

The diameter of the first shaft portion may be less than or equal to 90% of a diameter of the second shaft portion. The diameter of the first shaft portion may be greater than or equal to 50% of the diameter of the second shaft portion.

The release shaft may include a first taper portion. The first taper portion may be located between the first shaft portion and the second shaft portion in the second axis direction. A diameter of the first taper portion may reduce from the second shaft portion toward the first shaft portion. In this case, the diameter of the release shaft gradually changes at the first taper portion. Therefore, it is possible to inhibit occurrence of stress concentration in comparison with a configuration that the diameter of the release shaft suddenly changes between the first shaft portion and the second shaft portion. Accordingly, it is possible to inhibit reduction in strength of the release shaft.

The first shaft portion may be longer than the pressing portion in the second axis direction. In this case, the stiffness of the release shaft is weakened at the first shaft portion, whereby it is possible to inhibit arising of the feeling of sudden clutch engagement.

The release shaft may include a second taper portion. The second taper portion may be located between the first shaft portion and the pressing portion in the second axis direction. A diameter of the second taper portion may reduce from the pressing portion toward the first shaft portion. In this case, the diameter of the release shaft gradually changes at the second taper portion. Therefore, it is possible to inhibit occurrence of stress concentration in comparison with a configuration that the diameter of the release shaft suddenly changes between the first shaft portion and the pressing portion. Accordingly, it is possible to inhibit reduction in strength of the release shaft.

A total number of the first friction plate and the second friction plate may be less than or equal to five.

The motorcycle may further include a vehicle body frame, an engine, a steering shaft, a handle member, a front fork, a front wheel, a rear arm and a rear wheel. The vehicle body frame may include a head pipe. The engine may be supported by the vehicle body frame. The steering shaft may be inserted into the head pipe. The handle member may be coupled to an upper portion of the steering shaft. The front fork may be coupled to a lower portion of the steering shaft. The front wheel may be disposed in front of the engine, and may be rotatably supported by the front fork. The rear arm may be pivotably supported by the engine or the vehicle body frame. The rear wheel may be disposed behind the engine, and may be rotatably supported by the rear arm.

The clutch operating member may be a clutch lever attached to the handle member.
FIG. 1 is a side view of a motorcycle according to a preferred embodiment.
FIG. 2 is a top view of the motorcycle.
FIG. 3 is a cross-sectional view of a clutch unit.
FIG. 4 is a view of an inner member as seen from a first axis direction.
FIG. 5 is a view of a pressure member as seen from the first axis direction.
FIG. 6 is a perspective view of the inner member.
FIG. 7 is a perspective view of the pressure member.
FIG. 8 is a view of part of a release mechanism as seen from a second axis direction.
FIG. 9 is a view of part of the release mechanism as seen from a direction perpendicular to the first and second axis directions.
FIG. 10 is a view showing cross-sections of a first cam member and a second cam member.
FIG. 11 is a view showing the cross-sections of the first cam member and the second cam member.

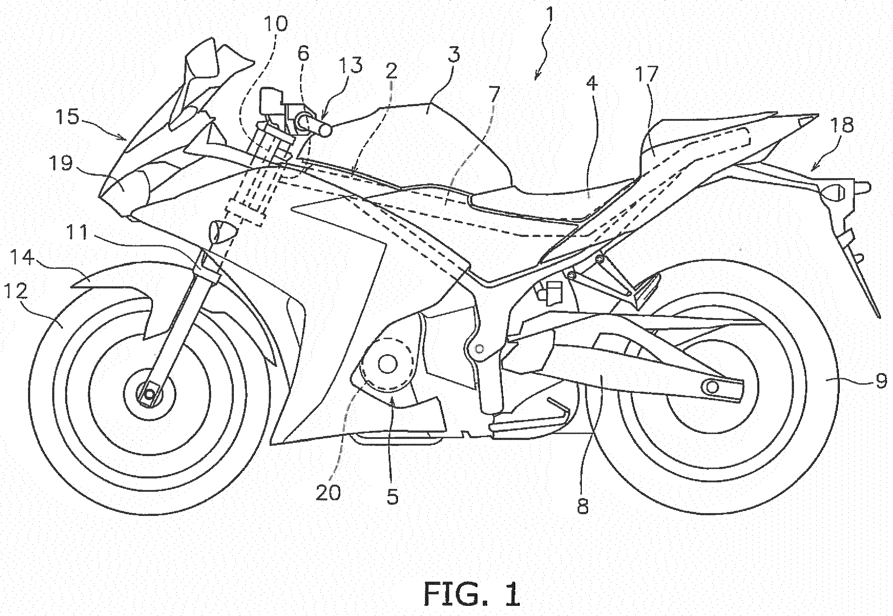

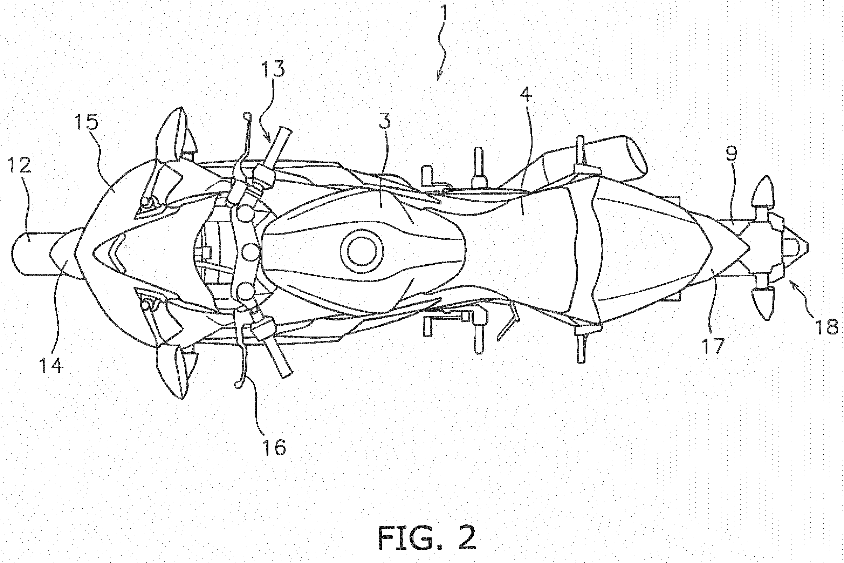

A motorcycle according to a preferred embodiment will be hereinafter explained with reference to drawings. FIG. 1 is a side view of a motorcycle 1 according to the preferred embodiment. FIG. 2 is a top view of the motorcycle 1. The motorcycle 1 is configured to make a turn while a vehicle body thereof is leaned. The motorcycle 1 is a motorcycle of a so-called sport type. As shown in FIG. 1, the motorcycle 1 includes a vehicle body frame 2, a fuel tank 3, a seat 4, an engine 5, a rear arm 8, a rear wheel 9, a steering shaft 10, a front fork 11 and a front wheel 12.

It should be noted that in the present specification, the terms "front", "rear", "right" and "left" are defined as indicating front, rear, right and left directions seen from a rider seated on the seat 4. The term "coupling" is not limited to direct coupling, and encompasses indirect coupling. Additionally, the term "coupling" is not limited to a condition that separate members are fixed to each other, and encompasses a condition that a plurality of portions in an integrated member continue to each other.

The term "inward in a vehicle width direction" means directions that approach to the center of the motorcycle 1 in the vehicle width direction. The term "outward in the vehicle width direction" means opposite directions to "inward in the vehicle width direction". In other words, the term "outward in the vehicle width direction" means directions that separate from the center of the motorcycle 1 in the vehicle width direction.

A condition of a constituent element "extending in a back-and-forth direction" is not limited to a condition of the constituent element extending in parallel to the back-and-forth direction. The condition of the constituent element "extending in the back-and-forth direction" refers to a condition that the smaller of two angles formed between the back-and-forth direction and the extending direction of the constituent element is less than or equal to 45 degrees. In other words, the condition of the constituent element "extending in the back-and-forth direction" encompasses a condition of the constituent element extending in a direction tilting relatively to the back-and-forth direction. Similarly to the condition of the constituent element "extending in the back-and-forth direction", a condition of the constituent element "extending in an up-and-down direction" encompasses a condition of the constituent element extending in a direction tilting relatively to the up-and-down direction, whereas a condition of the constituent element "extending in a right-and-left direction" also encompasses a condition of the constituent element extending in a direction tilting relatively to the right-and-left direction.

The vehicle body frame 2 includes a head pipe 6 and a main frame 7. The head pipe 6 is disposed in the middle of the vehicle in the vehicle width direction. The main frame 7 is coupled to the head pipe 6, and is disposed behind the head pipe 6. A rear portion of the main frame 7 is disposed above the rear wheel 9 as seen in a vehicle side view.

The fuel tank 3 is disposed behind the head pipe 6. The fuel tank 3 is disposed above the main frame 7. The seat 4 is disposed behind the fuel tank 3. The seat 4 is disposed above the main frame 7. The engine 5 is disposed below the fuel tank 3. The engine 5 is supported by the main frame 7.

The rear arm 8 is pivotably supported by the main frame 7. The rear arm 8 may be pivotably supported by the engine 5. The rear wheel 9 is disposed behind the engine 5. The rear wheel 9 is rotatably supported by the rear arm 8.

The steering shaft 10 is inserted into the head pipe 6. The steering shaft 10 is turnable about a center axis of the head pipe 6. The front fork 11 is coupled to a lower portion of the steering shaft 10 and extends downward. The front wheel 12 is rotatably supported by the front fork 11. The front wheel 12 is disposed in front of the engine 5. A front fender 14 is disposed above the front wheel 12.

The motorcycle 1 includes a handle member 13. The handle member 13 is coupled to an upper portion of the steering shaft 10. As shown in FIG. 2, a clutch operating member 16 is attached to the handle member 13. The clutch operating member 16 is a clutch lever provided to be operable by a rider.

The motorcycle 1 includes a front cover 15. The front cover 15 is disposed in front of the head pipe 6 and the handle member 13. A headlight 19 is disposed in the front cover 15.

The motorcycle 1 includes a rear cover 17 and a rear fender 18. The rear cover 17 is disposed below the seat 4. The rear cover 17 covers a rear portion of the main frame 7. The rear fender 18 is disposed above the rear wheel 9.

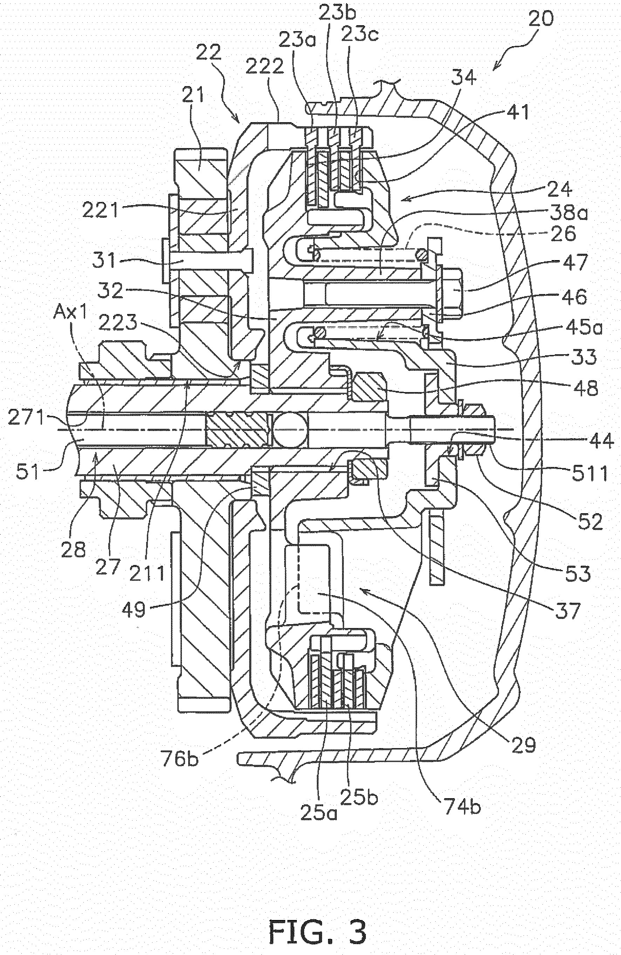

As shown in FIG. 1, the motorcycle 1 includes a clutch unit 20. FIG. 3 is a cross-sectional view of the clutch unit 20. As shown in FIG. 3, the clutch unit 20 includes a drive gear 21, a housing 22, a plurality of first friction plates 23a, 23b and 23c, a clutch inner assembly 24, a plurality of second friction plates 25a and 25b, urging members 26 and a main shaft 27.

The drive gear 21 is rotated about a first axis Ax1 by a driving force transmitted thereto from the engine 5. For example, the drive gear 21 is meshed with a gear provided on an output shaft of the engine 5. It should be noted that in the following explanation, a direction parallel to the first axis Ax1 will be referred to as "a first axis direction (Ax1)".

The housing 22 is coupled to the drive gear 21. For example, the housing 22 is fixed to the drive gear 21 by fixation means such as at least one rivet 31. The housing 22 may be fixed to the drive gear 21 by another fixation means. The housing 22 is rotated about the first axis Ax1 together with the drive gear 21. The housing 22 is made in the shape of a cylinder opened to one side in the first axis direction (Ax1). The housing 22 includes a lateral wall portion 221 and a peripheral wall portion 222. The lateral wall portion 221 extends in a direction perpendicular to the first axis direction (Ax1). The lateral wall portion 221 is fixed to the drive gear 21. The peripheral wall portion 222 protrudes from the lateral wall portion 221 in the first axis direction (Ax1).

The first friction plates 23a, 23b and 23c are coupled to the housing 22. Each of the first friction plates 23a, 23b and 23c is made in the shape of an annulus. The first friction plates 23a, 23b and 23c protrude radially inward from the inner peripheral surface of the housing 22. The first friction plates 23a, 23b and 23c protrude radially inward from the inner peripheral surface of the peripheral wall portion 222. The first friction plates 23a, 23b and 23c are coupled to the housing 22 by spline joint. The first friction plates 23a, 23b and 23c are movable in the first axis direction (Ax1) with respect to the housing 22, but is non-rotatable with respect to the housing 22. Therefore, the first friction plates 23a, 23b and 23c are rotated about the first axis Ax1 together with the housing 22.

The clutch inner assembly 24 is accommodated in the housing 22. The clutch inner assembly 24 includes an inner member 32 and a pressure member 33. The inner member 32 is disposed between the lateral wall portion 221 and the pressure member 33 in the first axis direction (Ax1). The inner member 32 is rotatable about the first axis Ax1 with respect to the housing 22.

The pressure member 33 is disposed in alignment with the inner member 32 in the first axis direction (Ax1). The pressure member 33 is disposed to face the inner member 32 in the first axis direction (Ax1). The pressure member 33 is movable in the first axis direction (Ax1) with respect to the inner member 32.

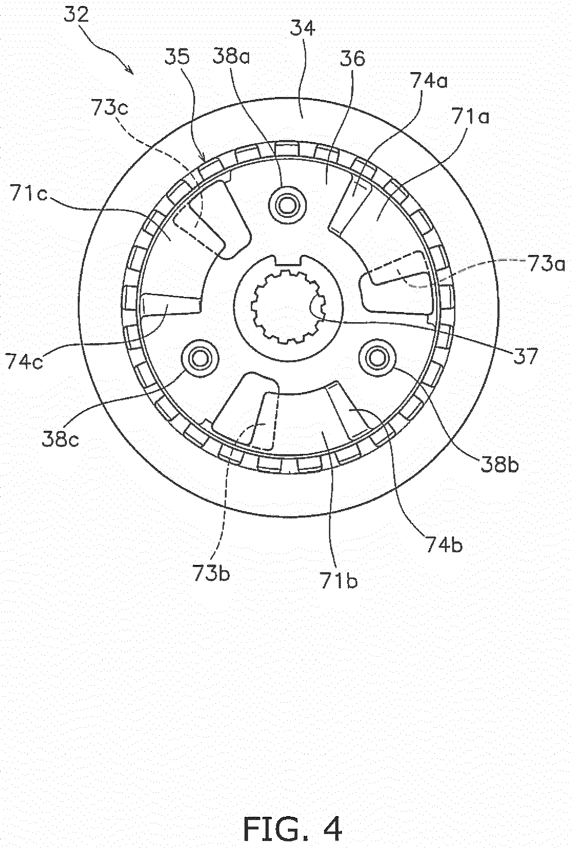

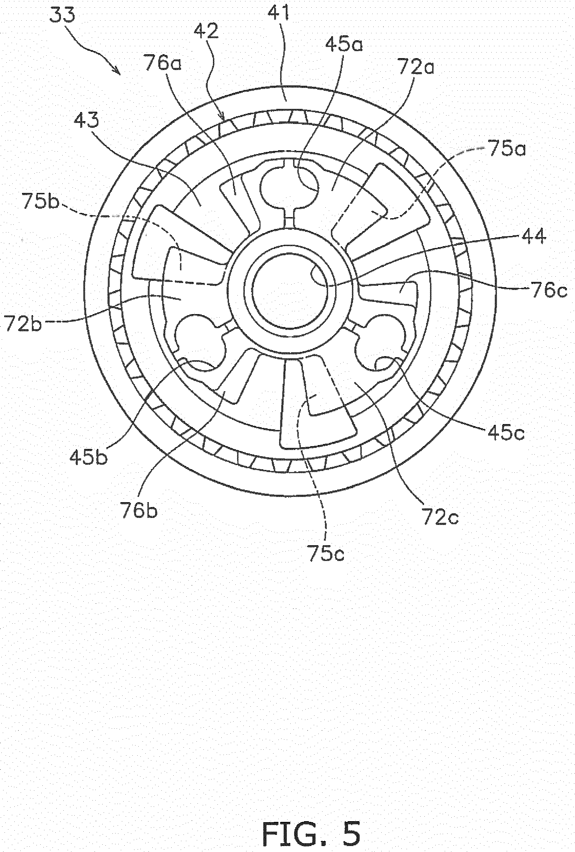

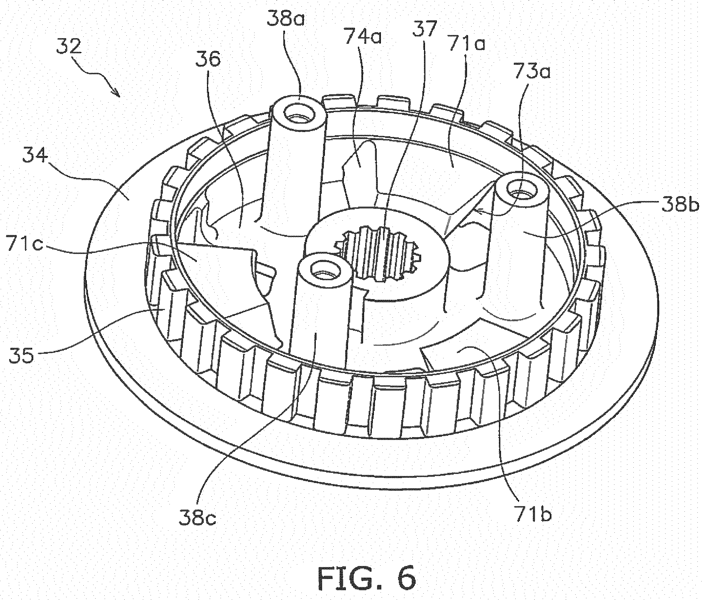

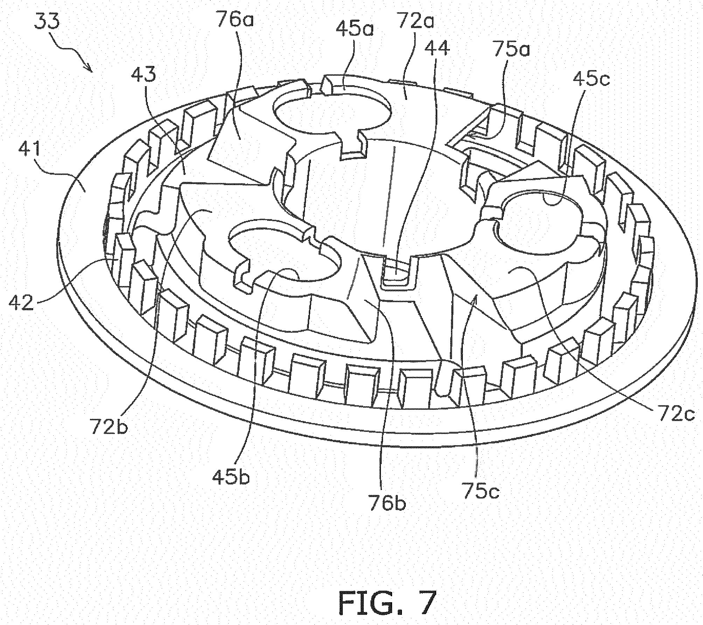

FIG. 4 is a view of the inner member 32 as seen from the first axis direction (Ax1). FIG. 5 is a view of the pressure member 33 as seen from the first axis direction (Ax1). FIG. 6 is a perspective view of the inner member 32. FIG. 7 is a perspective view of the pressure member 33. As shown in FIGS. 4 to 7, each of the inner member 32 and the pressure member 33 is contoured approximately in the shape of a disc.

As shown in FIGS. 4 and 6, the inner member 32 includes a first plate portion 34, a first tube portion 35 and a first center portion 36. The first plate portion 34 is made in the shape of an annulus. The first plate portion 34 protrudes radially outward from the first tube portion 35. The first tube portion 35 protrudes from the first plate portion 34 in the first axis direction (Ax1). The first tube portion 35 is made in the shape of a cylinder.

The outer peripheral surface of the first tube portion 35 is made in the shape of splines extending in the first axis direction (Ax1). The first center portion 36 is located radially inside the first tube portion 35. The first center portion 36 includes a first center hole 37. The main shaft 27 is inserted into the first center hole 37.

As shown in FIGS. 5 and 7, the pressure member 33 includes a second plate portion 41, a second tube portion 42 and a second center portion 43. The second plate portion 41 is made in the shape of an annulus. The second plate portion 41 protrudes radially outward from the second tube portion 42. The second plate portion 41 is movable in the first axis direction (Ax1) with respect to the first plate portion 34. The second tube portion 42 protrudes from the second plate portion 41 in the first axis direction (Ax1).

The second tube portion 42 is made in the shape of a cylinder. The outer peripheral surface of the second tube portion 42 is made in the shape of splines extending in the first axis direction (Ax1). The second center portion 43 is located radially inside the second tube portion 42. The second center portion 43 includes a second center hole 44. A push rod 51 (to be described) is inserted into the second center hole 44.

As shown in FIG. 3, the second friction plates 25a and 25b are disposed, together with the first friction plates 23a, 23b and 23c, between the first plate portion 34 and the second plate portion 41. The first friction plates 23a, 23b and 23c and the second friction plates 25a and 25b are alternately disposed in the first axis direction (Ax1). Each of the second friction plates 25a and 25b is made in the shape of an annulus. The second friction plates 25a and 25b are coupled to the clutch inner assembly 24 by spline joint. The second friction plates 25a and 25b are movable in the first axis direction (Ax1) with respect to the clutch inner assembly 24, but is non-rotatable about the first axis Ax1 with respect to the clutch inner assembly 24. Therefore, the second friction plates 25a and 25b are rotated about the first axis Ax1 together with the clutch inner assembly 24.

Detailedly, the second friction plates 25a and 25b include a first clutch plate 25a and a second clutch plate 25b. The first clutch plate 25a is coupled to the inner member 32. The first clutch plate 25a is coupled to the first tube portion 35 by spline joint. The first clutch plate 25a is movable in the first axis direction (Ax1) with respect to the inner member 32, but is non-rotatable about the first axis Ax1 with respect to the inner member 32. Therefore, the first clutch plate 25a is rotated about the first axis Ax1 together with the inner member 32.

The second clutch plate 25b is coupled to the pressure member 33. The second clutch plate 25b is coupled to the second tube portion 42 by spline joint. The second clutch plate 25b is movable in a second axis direction (Ax2) with respect to the pressure member 33, but is non-rotatable about a second axis Ax2 with respect to the pressure member 33. Therefore, the second clutch plate 25b is rotated about the first axis Ax1 together with the pressure member 33.

It should be noted that in the present preferred embodiment, the number of the first friction plates 23a, 23b and 23c is three, whereas the number of the second friction plates 25a and 25b is two. Therefore, the total number of the friction plates in the clutch unit 20 is five. However the number of the friction plates in the clutch unit 20 may be less than five. Alternatively, the number of the friction plates in the clutch unit 20 may be greater than five.

As shown in FIG. 6, the inner member 32 includes a plurality of boss portions 38a, 38b and 38c. The boss portions 38a, 38b and 38c protrude from the first center portion 36 in the first axis direction (Ax1). As shown in FIG. 7, the pressure member 33 includes a plurality of openings 45a, 45b and 45c. As shown in FIG. 3, the boss portions 38a, 38b and 38c are disposed in the openings 45a, 45b and 45c, respectively.

As shown in FIG. 3, a presser member 46 is attached to the inner member 32. The presser member 46 is fixed to the inner member 32 by fixation means such as at least one bolt 47. Detailedly, the presser member 46 is fixed to the boss portions 38a, 38b and 38c by fixation means such as the bolts 47. However the presser member 46 may be fixed to the inner member 32 by another fixation means.

The urging members 26 are disposed between the presser member 46 and the pressure member 33. The urging members 26 press the pressure member 33 toward the inner member 32. In other words, the urging members 26 press the second plate portion 41 toward the first plate portion 34. The urging members 26 press the second plate portion 41 toward the first plate portion 34, such that the first friction plates 23a, 23b and 23c and the second friction plates 25a and 25b are pressed in contact with each other. The urging members 26 are, for instance, coil springs. It should be noted that the urging members 26 may be members other than the coil springs.

The main shaft 27 is disposed coaxially to the housing 22 and the clutch inner assembly 24. The main shaft 27 extends in the first axis direction (Ax1). In the present preferred embodiment, the first axis direction (Ax1) is the vehicle width direction of the motorcycle 1. Therefore, the main shaft 27 extends in the vehicle width direction of the motorcycle 1.

The main shaft 27 is rotatable about the first axis Ax1. The housing 22 includes a hole 223 penetrating therethrough in the first axis direction (Ax1). The drive gear 21 includes a hole 211 penetrating therethrough in the first axis direction (Ax1), The main shaft 27 is inserted into the hole 223 of the housing 22 and the hole 211 of the drive gear 21. The housing 22 and the drive gear 21 are rotatable about the first axis Ax1 with respect to the main shaft 27.

The main shaft 27 is coupled to the clutch inner assembly 24. Detailedly, the main shaft 27 is coupled to the inner member 32 by spline joint. The main shaft 27 is fixed to the inner member 32 by a nut 48. The inner member 32 is interposed between a plate 49 and the nut 48 attached to the main shaft 27. Therefore, the inner member 32 is immovable in the first axis direction (Ax1). It should be noted that the main shaft 27 may be fixed to the inner member 32 by another fixation means.

The main shaft 27 is immovable in the first axis direction (Ax1) with respect to the clutch inner assembly 24. Additionally, the main shaft 27 is non-rotatable about the first axis Ax1 with respect to the clutch inner assembly 24. Therefore, the main shaft 27 is rotated about the first axis Ax1 together with the clutch inner assembly 24. The main shaft 27 is coupled to a transmission (not shown in the drawings). Rotation of the main shaft 27 is transmitted to the rear wheel 9 through transmitting members such as the transmission, a chain and so forth (not shown in the drawings).

The clutch unit 20 includes a release mechanism 28. The release mechanism 28 moves the pressure member 33 in a direction separating from the inner member 32 in response to operating the clutch operating member 16. Accordingly, the second plate portion 41 is moved in a direction separating from the first plate portion 34.

As shown in FIG. 3, the release mechanism 28 includes the push rod 51. The push rod 51 extends in the first axis direction (Ax1). The main shaft 27 includes a hole 271 penetrating therethrough in the first axis direction (Ax1). The push rod 51 is disposed inside the hole 271 of the main shaft 27. In other words, the clutch unit 20 has a clutch structure of a so-called inner push type. The push rod 51 is movable in the first axis direction (Ax1) with respect to the main shaft 27.

The push rod 51 includes a first end portion 511. The first end portion 511 protrudes from the main shaft 27 in the first axis direction (Ax1). The first end portion 511 is coupled to the pressure member 33. Detailedly, the first end portion 511 is coupled to the pressure member 33 by fixation means such as a nut 52 and a plate 53. It should be noted that the first end portion 511 may be coupled to the pressure member 33 by another fixation means. The pressure member 33 is moved in the first axis direction (Ax1) together with the push rod 51.

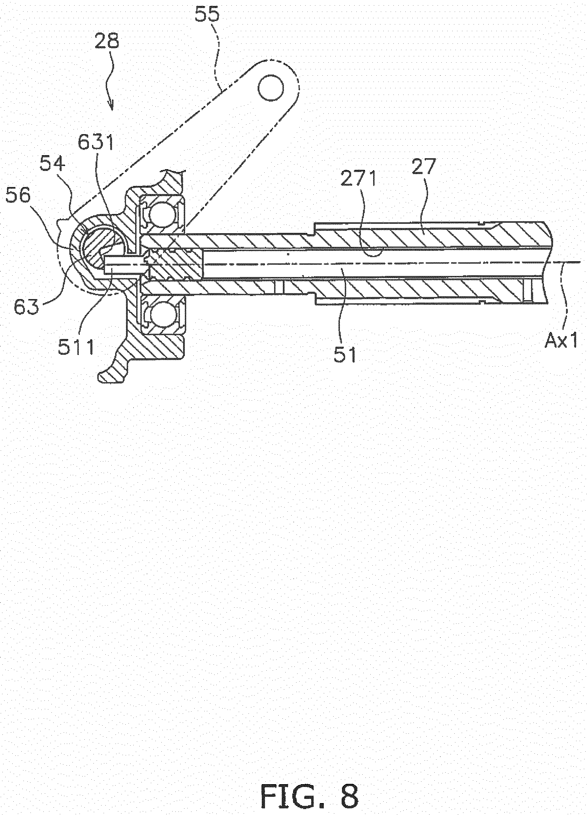

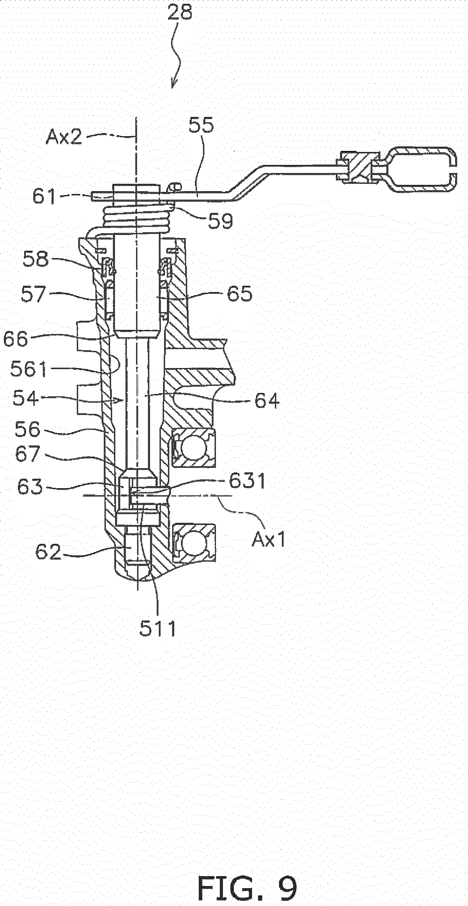

FIG. 8 is a view of part of the release mechanism 28 as seen from the second axis direction (Ax2). The second axis direction (Ax2) is a direction intersecting with the push rod 51. Detailedly, the second axis direction (Ax2) is a direction perpendicular to the first axis direction (Ax1). FIG. 9 is a view of part of the release mechanism 28 as seen from a direction perpendicular to both the first axis direction (Ax1) and the second axis direction (Ax2). As shown in FIGS. 8 and 9, the release mechanism 28 includes a release shaft 54 and a coupling member 55.

The release shaft 54 extends in the second axis direction (Ax2). The release shaft 54 is supported by a support member 56. For example, the support member 56 is part of the transmission. It should be noted that the support member 56 may be part of a device other than the transmission. The support member 56 includes a hole 561. The release shaft 54 is disposed inside the hole 561 of the support member 56. A bearing 57 is disposed between the support member 56 and the release shaft 54. The release shaft 54 is supported by the support member 56 through the bearing 57. The release shaft 54 is rotatable about the second axis Ax2. An oil seal 58 seals between the release shaft 54 and the inner peripheral surface of the hole 561.

The coupling member 55 couples the release shaft 54 and the clutch operating member 16. The coupling member 55 extends in a direction perpendicular to the second axis direction (Ax2). The coupling member 55 is coupled to the clutch operating member 16 through a clutch transmitting member such as a wire or a rod. The coupling member 55 is rotated about the second axis Ax2 in response to operating the clutch operating member 16. Accordingly, the release shaft 54 is rotated about the second axis Ax2.

The release shaft 54 includes a connecting portion 61, a distal end portion 62, a pressing portion 63, a first shaft portion 64 and a second shaft portion 65. The connecting portion 61 is a portion to which the coupling member 55 is coupled. The connecting portion 61 is one end portion of the release shaft 54 in the second axis direction (Ax2). The distal end portion 62 is the other end portion of the release shaft 54 in the second axis direction (Ax2). The connecting portion 61 is disposed outside the hole 561 of the support member 56. The distal end portion 62 is disposed inside the hole 561 of the support member 56.

The pressing portion 63 presses the push rod 51 while in contact with the push rod 51. The pressing portion 63 includes a cam portion 631. The cam portion 631 has a shape recessed from the outer peripheral surface of the pressing portion 63. The push rod 51 includes a second end portion 512. The aforementioned first end portion 511 is one end portion of the push rod 51 in the first axis direction (Ax1), whereas the second end portion 512 is the other end portion of the push rod 51 in the first axis direction (Ax1). The second end portion 512 is located on the opposite side of the first end portion 511 in the first axis direction (Ax1).

The cam portion 631 makes contact with the second end portion 512. When the release shaft 54 is rotated, the cam portion 631 presses the push rod 51 in the first axis direction (Ax1). The diameter of the pressing portion 63 is larger than that of the distal end portion 62.

The first shaft portion 64 is located between the connecting portion 61 and the pressing portion 63 in the second axis direction (Ax2). The first shaft portion 64 is disposed inside the hole 561 of the support member 56. The diameter of the first shaft portion 64 is smaller than that of the connecting portion 61. In other words, the first shaft portion 64 is thinner than the connecting portion 61. The diameter of the first shaft portion 64 is smaller than that of the pressing portion 63. In other words, the first shaft portion 64 is thinner than the pressing portion 63. The diameter of the first shaft portion 64 is smaller than that of the distal end portion 62. In other words, the first shaft portion 64 is thinner than the distal end portion 62.

The second shaft portion 65 is located between the connecting portion 61 and the first shaft portion 64 in the second axis direction (Ax2). The second shaft portion 65 is rotatably supported by the bearing 57. Part of the second shaft portion 65 is disposed inside the hole 561 of the support member 56. The rest of the second shaft portion 65 is disposed outside the hole 561 of the support member 56. The diameter of the second shaft portion 65 is equal to that of the connecting portion 61. The diameter of the first shaft portion 64 is smaller than that of the second shaft portion 65. In other words, the first shaft portion 64 is thinner than the second shaft portion 65.

The first shaft portion 64 is longer than the pressing portion 63 in the second axis direction (Ax2). The first shaft portion 64 is longer than the connecting portion 61 in the second axis direction (Ax2). The first shaft portion 64 is longer than the distal end portion 62 in the second axis direction (Ax2). The length of the first shaft portion 64 is shorter than the total length of the connecting portion 61 and the second shaft portion 65 in the second axis direction (Ax2).

The release shaft 54 includes a first taper portion 66 and a second taper portion 67. The first taper portion 66 is located between the first shaft portion 64 and the second shaft portion 65 in the second axis direction (Ax2). The diameter of the first taper portion 66 reduces from the second shaft portion 65 toward the first shaft portion 64. The second taper portion 67 is located between the first shaft portion 64 and the pressing portion 63 in the second axis direction (Ax2). The diameter of the second taper portion 67 reduces from the pressing portion 63 toward the first shaft portion 64.

When rotated in response to operating the clutch operating member 16, the release shaft 54 moves the push rod 51 in the first axis direction (Ax1). The release shaft 54 is movable to a pressing position and a non-pressing position. An urging member 59 is attached to the second shaft portion 65. The urging member 59 urges the release shaft 54 toward the non-pressing position.

When the clutch operating member 16 is not being operated by a rider, the release shaft 54 is held in the non-pressing position by the urging force of the urging member 59. When the release shaft 54 is held in the non-pressing position, the pressure member 33 is being pressed by the urging force of the urging member 59 to one side in the first axis direction (Ax1) that the second plate portion 41 approaches to the first plate portion 34 (this side will be hereinafter referred to as "an engaging direction"). Accordingly, the first friction plates 23a, 23b and 23c and the second friction plates 25a and 25b are pressed in contact with each other by the first plate portion 34 and the second plate portion 41. In this state, rotation of the housing 22 is transmitted to the main shaft 27 through the first friction plates 23a, 23b and 23c, the second friction plates 25a and 25b, and the clutch inner assembly 24. In other words, the clutch unit 20 becomes an engaged state in which the driving force of the engine 5 is transmitted to the rear wheel 9.

When the clutch operating member 16 is operated by the rider, the release shaft 54 is rotated about the second axis Ax2 against the urging force of the urging member 59, and is moved from the non-pressing position to the pressing position. When the release shaft 54 is held in the pressing position, the pressing portion 63 presses the push rod 51 in the first axis direction (Ax1) (rightward in FIGS. 3 and 8). When the push rod 51 is pressed by the pressing portion 63 and is moved in the first axis direction (Ax1), the pressure member 33 is moved against the urging force of the urging member 59 to the other side in the first axis direction (Ax1) that the second plate portion 41 separates from the first plate portion 34 (this side will be hereinafter referred to as "a releasing direction"). Accordingly, the first friction plates 23a, 23b and 23c and the second friction plates 25a and 25b are released from being pressed in contact with each other. In this state, rotation of the housing 22 is not transmitted to the main shaft 27. In other words, the clutch unit 20 becomes a released state in which the driving force of the engine 5 is not transmitted to the rear wheel 9.

The clutch unit 20 includes an assist mechanism 29. When the main shaft 27 is accelerated in rotation, the assist mechanism 29 increases the press-contact force between the first friction plates 23a, 23b and 23c and the second friction plates 25a and 25b. Contrarily when the main shaft 27 is decelerated in rotation, the assist mechanism 29 reduces the press-contact force between the first friction plates 23a, 23b and 23c and the second friction plates 25a and 25b. In other words, the clutch unit 20 is a so-called assist slipper clutch.

As shown in FIGS. 4 to 7, the assist mechanism 29 includes a plurality of first cam members 71a, 71b and 71c and a plurality of second cam members 72a, 72b and 72c. As shown in FIG. 6, the first cam members 71a, 71b and 71c are provided on the inner member 32. As described above, the inner member 32 is coupled to the main shaft 27. Therefore, the first cam members 71a, 71b and 71c are coupled to the main shaft 27.

The first cam members 71a, 71b and 71c protrude from the first center portion 36 in the first axis direction (Ax1). The first cam members 71a, 71b and 71c protrude from the first center portion 36 toward the pressure member 33. The first cam member 71a includes a first assist slope 73a and a first slipper slope 74a. Each of the first assist slope 73a and the first slipper slope 74a slants with respect to the first axis direction (Ax1). Each of the first assist slope 73a and the first slipper slope 74a extends in a radial direction of the inner member 32.

The first cam member 71b includes a first assist slope 73b and a first slipper slope 74b. The first cam member 71c includes a first assist slope 73c and a first slipper slope 74c. The structure of each of the first cam members 71b and 71c is similar to that of the first cam member 71a. Hence, detailed explanation thereof will be omitted.

As shown in FIG. 7, the second cam members 72a, 72b and 72c are provided on the pressure member 33. Therefore, the second cam members 72a, 72b and 72c are coupled to the second plate portion 41. The second cam members 72a, 72b and 72c protrude from the second center portion 43 in the first axis direction (Ax1). The second cam members 72a, 72b and 72c protrude from the second center portion 43 toward the inner member 32.

The second cam member 72a includes a second assist slope 75a and a second slipper slope 76a. Each of the second assist slope 75a and the second slipper slope 76a slants with respect to the first axis direction (Ax1). The second assist slope 75a slants in an identical direction to the first assist slope 73a. The second slipper slope 76a slants in an identical direction to the first slipper slope 74a. Each of the second assist slope 75a and the second slipper slope 76a extends in a radial direction of the inner member 32.

The second cam member 72b includes a second assist slope 75b and a second slipper slope 76b. The second cam member 72c includes a second assist slope 75c and a second slipper slope 76c. The structure of each of the second cam members 72b and 72c is similar to that of the second cam member 72a. Hence, detailed explanation thereof will be omitted.

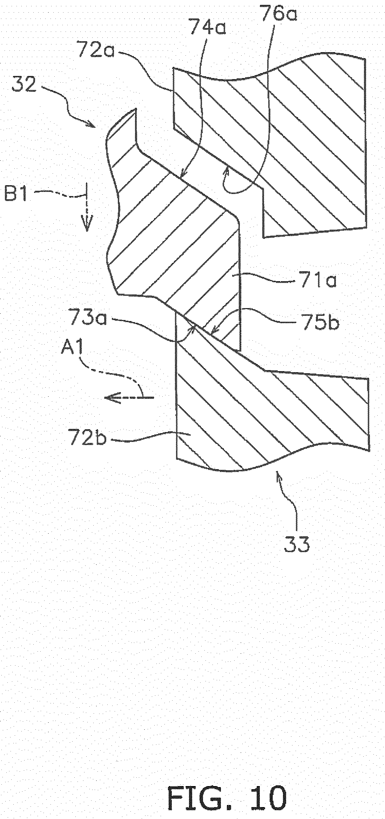

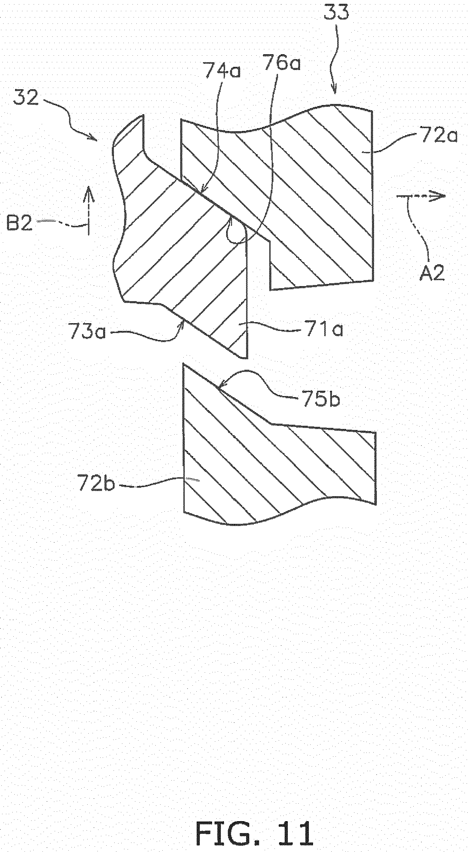

FIGS. 10 and 11 are cross-sectional views of the first cam member 71a and the second cam members 72a and 72b. As shown in FIG. 10, the first assist slope 73a is opposed to the second assist slope 75b in a rotational direction of the clutch inner assembly 24. The first slipper slope 74a is opposed to the second slipper slope 76a in the rotational direction of the clutch inner assembly 24.

When the main shaft 27 is accelerated in rotation, the rotational velocity of the inner member 32 becomes faster than that of the pressure member 33. In other words, the rotational velocity of the first cam member 71a becomes faster than that of the second cam members 72a and 72b. Therefore, as shown in FIG. 10, the first assist slope 73a is moved in a direction approaching to the second assist slope 75b (arrow B1 in FIG. 10).

Then, the first assist slope 73a makes contact with the second assist slope 75b, and presses the second assist slope 75b in the rotational direction of the clutch inner assembly 24. Similarly to the first assist slope 73a, the first assist slopes 73b and 73c also press the second assist slopes 75c and 75a, respectively. Accordingly, the pressure member 33 is moved in the engaging direction (arrow A1 in FIG. 10), whereby the second plate portion 41 is moved in the engaging direction. As a result, the press-contact force between the first friction plates 23a, 23b and 23c and the second friction plates 25a and 25b increases.

When the main shaft 27 is decelerated in rotation, the rotational velocity of the inner member 32 becomes slower than that of the pressure member 33. In other words, the rotational velocity of the first cam members 71a, 71b and 71c becomes slower than that of the second cam members 72a, 72b and 72c. Therefore, as shown in FIG. 11, the first slipper slope 74a is moved in a direction approaching to the second slipper slope 76a (arrow B2 in FIG. 11).

Then, the first slipper slope 74a makes contact with the second slipper slope 76a, and presses the second slipper slope 76a in the rotational direction of the clutch inner assembly 24. Similarly to the first slipper slope 74a, the first slipper slopes 74b and 74c also press the second slipper slopes 76b and 76c, respectively. Accordingly, the pressure member 33 is moved in the releasing direction (arrow A2 in FIG. 11), whereby the second plate portion 41 is moved in the releasing direction. As a result, the press-contact force between the first friction plates 23a, 23b and 23c and the second friction plates 25a and 25b reduces.

In the motorcycle 1 according to the present preferred embodiment explained above, the release shaft 54 includes the first shaft portion 64 that is thinner than the connecting portion 61. Therefore, the stiffness of the release shaft 54 is weakened at the first shaft portion 64. Because of this, slight delay occurs in transmitting an operating force from the clutch operating member 16 to the clutch inner assembly 24 through the release shaft 54. As a result, it is possible to inhibit arising of a feeling that the clutch is suddenly engaged. Additionally, it is possible to inhibit arising of the feeling of sudden clutch engagement by devising the shape of the release shaft 54, whereby it is possible to inhibit reduction in assist force.

The first shaft portion 64 is thinner than the pressing portion 63. Therefore, the stiffness of the release shaft 54 is weakened at the first shaft portion 64, whereby it is possible to inhibit arising of the feeling of sudden clutch engagement. Additionally, the pressing portion 63 is thicker than the first shaft portion 64, whereby it is possible to inhibit reduction in strength of the pressing portion 63.

The first shaft portion 64 is thinner than the second shaft portion 65. Therefore, the stiffness of the release shaft 54 is weakened at the first shaft portion 64, whereby it is possible to inhibit arising of the feeling of sudden clutch engagement. Additionally, the second shaft portion 65 is thicker than the first shaft portion 64, whereby it is possible to inhibit reduction in strength of the second shaft portion 65.

In the release shaft 54, the diameter of the first taper portion 66 reduces from the second shaft portion 65 toward the first shaft portion 64. Therefore, the diameter of the release shaft 54 gradually changes at the first taper portion 66. Because of this, it is possible to inhibit occurrence of stress concentration in comparison with a configuration that the diameter of the release shaft 54 suddenly changes between the first shaft portion 64 and the second shaft portion 65. Accordingly, it is possible to inhibit reduction in strength of the release shaft 54.

The first shaft portion 64 is longer than the pressing portion 63 in the second axis direction (Ax2). Therefore, the stiffness of the release shaft 54 is weakened at the first shaft portion 64, whereby it is possible to inhibit arising of the feeling of sudden clutch engagement.

In the release shaft 54, the diameter of the second taper portion 67 reduces from the pressing portion 63 toward the first shaft portion 64. Therefore, the diameter of the release shaft 54 gradually changes at the second taper portion 67. Therefore, it is possible to inhibit occurrence of stress concentration in comparison with a configuration that the diameter of the release shaft 54 suddenly changes between the first shaft portion 64 and the pressing portion 63. Accordingly, it is possible to inhibit reduction in strength of the release shaft 54.

The diameter of the first shaft portion 64 is desirably small in order to inhibit arising of the feeling of sudden clutch engagement. However, when the diameter of the first shaft portion 64 is excessively small, this results in a drawback of deficiency in strength of the first shaft portion 64. Therefore, the diameter of the first shaft portion 64 is preferably set to satisfy both inhibiting arising of the feeling of sudden clutch engagement and reliably obtaining sufficient strength of the first shaft portion 64.

For example, the diameter of the first shaft portion 64 is preferably less than or equal to 90% of the diameter of the connecting portion 61. The diameter of the first shaft portion 64 is preferably greater than or equal to 50% of the diameter of the connecting portion 61. The diameter of the first shaft portion 64 is preferably less than or equal to 90% of the diameter of the pressing portion 63. The diameter of the first shaft portion 64 is preferably greater than or equal to 50% of the diameter of the pressing portion 63. The diameter of the first shaft portion 64 is preferably less than or equal to 90% of the diameter of the second shaft portion 65. The diameter of the first shaft portion 64 is preferably greater than or equal to 50% of the diameter of the second shaft portion 65.

One preferred embodiment of the present invention has been explained above. However, the present invention is not limited to the aforementioned preferred embodiment, and a variety of changes can be made without departing from the gist of the present invention.

The motorcycle 1 is not limited to a vehicle of a so-called sport type, and may be a vehicle of another type. For example, the motorcycle 1 may be a vehicle of a naked, off-road, moped or scooter type. The number of front wheels is not limited to one, and alternatively, may be two or greater. The number of the rear wheels is not limited to one, and alternatively, may be two or greater.

The structure of the clutch unit 20 may be changed. For example, the shape of the housing 22 may be changed. The shape of the clutch inner assembly 24 may be changed. The structure of the assist mechanism 29 may be changed. For example, the shape of the inner member 32 may be changed. The shape of the pressure member 33 may be changed.

In the aforementioned preferred embodiment, the first cam members 71a, 71b and 71c and the first plate portion 34 are provided as integrated portions of the inner member 32. However, the first cam members 71a, 71b and 71c and the first plate portion 34 may be provided as separate members. In the aforementioned preferred embodiment, the second cam members 72a, 72b and 72c and the second plate portion 41 are provided as integrated portions of the pressure member 33. However, the second cam members 72a, 72b and 72c and the second plate portion 41 may be provided as separate members.

The structure of the release mechanism 28 may be changed. For example, the shape of the coupling member 55 may be changed. The shape of the release shaft 54 may be changed. The thickness of the first shaft portion 64 may be changed. The length of the first shaft portion 64 may be changed. The thickness of the second shaft portion 65 may be different from that of the connecting portion 61. The thickness of the distal end portion 62 may be equal to that of the pressing portion 63. The first taper portion 66 may be omitted. The second taper portion 67 may be omitted.

It should be noted that the feeling of sudden clutch engagement, arising by employing an assist clutch, is intensified in a small motorcycle. Therefore, for instance, the aforementioned advantageous effect of inhibiting arising of the feeling of sudden clutch engagement is more effective in a motorcycle with an engine displacement of less than or equal to 250 cc. Alternatively, the aforementioned advantageous effect is more effective in a motorcycle including first and second friction plates that the total number thereof is less than or equal to five. It should be noted that the present invention may be applied to a motorcycle with an engine displacement of greater than 250 cc. The present invention may be applied to a motorcycle including first and second friction plates that the total number thereof is more than five.

The terms and expressions, as used herein, are provided for the purpose of explanation, not of limitation to interpretation. It is to be recognized that there is no intention to exclude any equivalents of the features herein illustrated and described, and various modifications are possible within the scope claimed in the present invention.

## Claims

1. A motorcycle (1) configured to make a turn in a lean posture, the motorcycle (1) comprising:
a drive gear (21);
a housing (22) coupled to the drive gear (21);
a first friction plate (23a, 23b, 23c) coupled to the housing (22);
a clutch inner assembly (24) accommodated in the housing (22), the clutch inner assembly (24) including a first plate portion (34) and a second plate portion (41), the second plate portion (41) being movable in a first axis direction (Ax1) with respect to the first plate portion (34);
a second friction plate (25a, 25b) disposed together with the first friction plate (23a, 23b, 23c) between the first plate portion (34) and the second plate portion (41), the second friction plate (25a, 25b) being coupled to the clutch inner assembly (24);
an urging member (26) urging the second plate portion (41) toward the first plate portion (34) such that the first friction plate (23a, 23b, 23c) and the second friction plate (25a, 25b) are pressed in contact with each other;
a main shaft (27) coupled to the clutch inner assembly (24);
an assist mechanism (29) increasing a press-contact force between the first friction plate (23a, 23b, 23c) and the second friction plate (25a, 25b) when the main shaft (27) is accelerated in rotation;
a clutch operating member (16) provided to be operable by a rider; and
a release mechanism (28) moving the second plate portion (41) in a direction separating from the first plate portion (34) in response to operating the clutch operating member (16), wherein the assist mechanism (29) includes
a first cam member (71a, 71b, 71c) coupled to the main shaft (27), the first cam member (71a, 71b, 71c) including a first slope, the first slope slanting with respect to the first axis direction (Ax1), and
a second cam member (72a, 72b, 72c) coupled to the second plate portion (41), the second cam member (72a, 72b, 72c) including a second slope, the second slope slanting in an identical direction to the first slope,
the first slope is configured to press the second slope such that the second cam member (72a, 72b, 72c) is moved in the first axis direction (Ax1) when the main shaft (27) is accelerated in rotation,
the second plate portion (41) is configured to move toward the first plate portion (34) in conjunction with movement of the second cam member (72a, 72b, 72c) in the first axis direction (Ax1),
the release mechanism (28) includes
a push rod (51) extending in the first axis direction (Ax1), the push rod (51) being coupled to the second plate portion (41), the push rod (51) being disposed inside the main shaft (27),
**characterized in that**
the release mechanism (28) further includes
a release shaft (54) extending in a second axis direction (Ax2), the second axis direction (Ax2) intersecting with the push rod (51), and
a coupling member (55) coupling the release shaft (54) and the clutch operating member (16), wherein
the release shaft (54) is configured to rotate in response to operating the clutch operating member (16) so as to move the push rod (51) in the first axis direction (Ax1), and
the release shaft (54) includes
a connecting portion (61) to which the coupling member (55) is coupled,
a pressing portion (63) is configured to press the push rod (51) while being in contact with the push rod (51), and
a first shaft portion (64) is thinner than the connecting portion (61), the first shaft portion (64) being located between the connecting portion (61) and the pressing portion (63) in the second axis direction (Ax2).

2. The motorcycle (1) according to claim 1, wherein a diameter of the first shaft portion (64) is less than or equal to 90% of a diameter of the connecting portion (61).

3. The motorcycle (1) according to claim 1 or 2, wherein the diameter of the first shaft portion (64) is greater than or equal to 50% of the diameter of the connecting portion (61).

4. The motorcycle (1) according to any of claims 1 to 3, wherein the first shaft portion (64) is thinner than the pressing portion (63).

5. The motorcycle (1) according to claim 4, wherein the diameter of the first shaft portion (64) is less than or equal to 90% of a diameter of the pressing portion (63).

6. The motorcycle (1) according to claim 4 or 5, wherein the diameter of the first shaft portion (64) is greater than or equal to 50% of the diameter of the pressing portion (63).

7. The motorcycle (1) according to any of claims 1 to 6, further comprising:
a support member (56) supporting the release shaft (54); and
a bearing (57) disposed between the support member (56) and the release shaft (54), wherein
the release shaft (54) further includes a second shaft portion (65), the second shaft portion (65) being located between the connecting portion (61) and the first shaft portion (64) in the second axis direction (Ax2),
the second shaft portion (65) is rotatably supported by the bearing (57), and
the first shaft portion (64) is thinner than the second shaft portion (65).

8. The motorcycle (1) according to claim 7, wherein the diameter of the first shaft portion (64) is less than or equal to 90% of a diameter of the second shaft portion (65).

9. The motorcycle (1) according to claim 7 or 8, wherein the diameter of the first shaft portion (64) is greater than or equal to 50% of the diameter of the second shaft portion (65).

10. The motorcycle (1) according to any of claims 7 to 9, wherein
the release shaft (54) includes a first taper portion (66), the first taper portion (66) being located between the first shaft portion (64) and the second shaft portion (65) in the second axis direction (Ax2), and
a diameter of the first taper portion (66) reduces from the second shaft portion (65) toward the first shaft portion (64).

11. The motorcycle (1) according to any of claims 1 to 10, wherein the first shaft portion (64) is longer than the pressing portion (63) in the second axis direction (Ax2).

12. The motorcycle (1) according to any of claims 1 to 11, wherein
the release shaft (54) includes a second taper portion (67), the second taper portion (67) being located between the first shaft portion (64) and the pressing portion (63) in the second axis direction (Ax2), and
a diameter of the second taper portion (67) reduces from the pressing portion (63) toward the first shaft portion (64).

13. The motorcycle (1) according to any of claims 1 to 12, wherein a total number of the first friction plate (23a, 23b, 23c) and the second friction plate (25a, 25b) is less than or equal to five.

14. The motorcycle (1) according to any of claims 1 to 13, further comprising:
a vehicle body frame (2) including a head pipe (6);
an engine (5) supported by the vehicle body frame (2);
a steering shaft (10) inserted into the head pipe (6);
a handle member (13) coupled to an upper portion of the steering shaft (10);
a front fork (11) coupled to a lower portion of the steering shaft (10);
a front wheel (12) disposed in front of the engine (5), the front wheel (12) being rotatably supported by the front fork (11);
a rear arm (8) pivotably supported by the engine (5) or the vehicle body frame (2); and
a rear wheel (9) disposed behind the engine (5), the rear wheel (9) being rotatably supported by the rear arm (8).

15. The motorcycle (1) according to claim 14, wherein the clutch operating member (16) is a clutch lever attached to the handle member (13).

## Patentansprüche

1. Motorrad (1), das so eingerichtet ist, dass es eine Kurve in einer Schräglage fährt, wobei das Motorrad (1) umfasst:
ein Antriebsrad (21);
ein Gehäuse (22), das mit dem Antriebsrad (21) gekoppelt ist;
eine erste Reibscheibe (23a, 23b, 23c), die mit dem Gehäuse (22) gekoppelt ist;
eine Kupplungs-Innenbaugruppe (24), die in dem Gehäuse (22) aufgenommen ist, wobei die Kupplungs-Innenbaugruppe (24) einen ersten Scheibenabschnitt (34) und einen zweiten Scheibenabschnitt (41) enthält, der zweite Scheibenabschnitt (41) in einer ersten Achsenrichtung (Ax1) in Bezug auf den ersten Scheibenabschnitt (34) bewegt werden kann;
eine zweite Reibscheibe (25a, 25b), die zusammen mit der ersten Reibscheibe (23a, 23b, 23c) zwischen dem ersten Scheibenabschnitt (34) und dem zweiten Scheibenabschnitt (41) angeordnet ist, wobei die zweite Reibscheibe (25a, 25b) mit der Kupplungs-Innenbaugruppe (24) gekoppelt ist;
ein Drück-Element (26), das den zweiten Scheibenabschnitt (41) so auf den ersten Scheibenabschnitt (34) zu drückt, dass die erste Reibscheibe (23a, 23b, 23c) und die zweite Reibscheibe (25a, 25b) in Kontakt miteinander gedrückt werden;
eine Hauptwelle (27), die mit der Kupplungs-Innenbaugruppe (24) gekoppelt ist;
einen Hilfs-Mechanismus (29), der eine Druckkontakt-Kraft zwischen der ersten Reibscheibe (23a, 23b, 23c) und der zweiten Reibscheibe (25a, 25b) verstärkt, wenn Drehung der Hauptwelle (27) beschleunigt wird;
ein Kupplungs-Betätigungselement (16), das so eingerichtet ist, dass es von einem Fahrer bedient werden kann; und
einen Löse-Mechanismus (28), der den zweiten Plattenabschnitt (41) in Reaktion auf Betätigen des Kupplungs-Betätigungselementes (16) in einer Richtung bewegt, in der er sich von dem ersten Plattenabschnitt (34) trennt, wobei
der Hilfs-Mechanismus (29) enthält:
ein erstes Nockenelement (71a, 71b, 71c), das mit der Hauptwelle (27) gekoppelt ist, wobei das erste Nockenelement (71a, 71b, 71c) eine erste Abschrägung aufweist und die erste Abschrägung in Bezug auf die erste Achsenrichtung (Ax1) geneigt ist, sowie ein zweites Nockenelement (72a, 72b, 72c), das mit dem zweiten Plattenabschnitt (41) gekoppelt ist, wobei das zweite Nockenelement (72a, 72b, 72c) eine zweite Abschrägung aufweist und die zweite Abschrägung in einer zu der ersten Abschrägung identischen Richtung geneigt ist,
wobei die erste Abschrägung so eingerichtet ist, dass sie die zweite Abschrägung so drückt, dass das zweite Nockenelement (72a, 72b, 72c) in der ersten Achsenrichtung (Ax1) bewegt wird, wenn Drehung der Hauptwelle (27) beschleunigt wird,
der zweite Plattenabschnitt (41) so eingerichtet ist, dass er sich in Verbindung mit Bewegung des zweiten Nockenelementes (72a, 72b, 72c) in der ersten Achsenrichtung (Ax1) auf den ersten Plattenabschnitt (34) zu bewegt,
der Löse-Mechanismus (28) enthält:
eine Schubstange (51), die sich in der ersten Achsenrichtung (Ax1) erstreckt, wobei die Schubstange (51) mit dem zweiten Plattenabschnitt (41) gekoppelt ist und die Schubstange (51) im Inneren der Hauptwelle (27) angeordnet ist,
**dadurch gekennzeichnet, dass**
der Löse-Mechanismus (28) des Weiteren enthält:
eine Löse-Welle (54), die sich in einer zweiten Achsenrichtung (Ax2) erstreckt, wobei die zweite Achsenrichtung (Ax2) die Schubstange (51) schneidet, sowie
ein Kopplungselement (55), das die Löse-Welle (54) und das Kupplungs-Betätigungselement (16) koppelt, wobei
die Löse-Welle (54) so eingerichtet ist, dass sie sich in Reaktion auf Betätigen des Kupplungs-Betätigungselementes (16) dreht und die Schubstange (51) in der ersten Achsenrichtung (Ax1) bewegt, und
die Löse-Welle (54) enthält:
einen Verbindungsabschnitt (61), mit dem das Kopplungselement (55) gekoppelt ist,
einen Press-Abschnitt (63), der so eingerichtet ist, dass er die Schubstange (51) presst und dabei in Kontakt mit der Schubstange (51) ist, sowie
einen ersten Wellenabschnitt (64), der dünner ist als der Verbindungsabschnitt (61), wobei sich der erste Wellenabschnitt (64) in der zweiten Achsenrichtung (Ax2) zwischen dem Verbindungsabschnitt (61) und dem Press-Abschnitt (63) befindet.

2. Motorrad (1) nach Anspruch 1, wobei ein Durchmesser des ersten Wellenabschnitts (64) 90% oder weniger eines Durchmessers des Verbindungsabschnitts (61) beträgt.

3. Motorrad (1) nach Anspruch 1 oder 2, wobei der Durchmesser des ersten Wellenabschnitts (64) 50% oder mehr des Durchmessers des Verbindungsabschnitts (61) beträgt.

4. Motorrad (1) nach einem der Ansprüche 1 bis 3, wobei der erste Wellenabschnitt (64) dünner ist als der Press-Abschnitt (63).

5. Motorrad (1) nach Anspruch 4, wobei der Durchmesser des ersten Wellenabschnitts (64) 90% oder weniger eines Durchmessers des Press-Abschnitts (63) beträgt.

6. Motorrad (1) nach Anspruch 4 oder 5, wobei der Durchmesser des ersten Wellenabschnitts (64) 50% oder mehr des Durchmessers des Press-Abschnitts (63) beträgt.

7. Motorrad (1) nach einem der Ansprüche 1 bis 6, das des Weiteren umfasst:
ein Trage-Element (56), das die Löse-Welle (54) trägt; sowie
ein Lager (57), das zwischen dem Trage-Element (56) und der Löse-Welle (54) angeordnet ist, wobei
die Löse-Welle (54) des Weiteren einen zweiten Wellenabschnitt (65) enthält, wobei sich der zweite Wellenabschnitt (65) in der zweiten Achsenrichtung (Ax2) zwischen dem Verbindungsabschnitt (61) und dem ersten Wellenabschnitt (64) befindet,
der zweite Wellenabschnitt (65) über das Lager (57) drehbar gelagert ist, und
der erste Wellenabschnitt (64) dünner ist als der zweite Wellenabschnitt (65).

8. Motorrad (1) nach Anspruch 7, wobei der Durchmesser des ersten Wellenabschnitts (64) 90% oder weniger eines Durchmessers des zweiten Wellenabschnitts (65) beträgt.

9. Motorrad (1) nach Anspruch 7 oder 8, wobei der Durchmesser des ersten Wellenabschnitts (64) 50% oder mehr des Durchmessers des zweiten Wellenabschnitts (65) beträgt.

10. Motorrad (1) nach einem der Ansprüche 7 bis 9, wobei
die Löse-Welle (54) einen ersten Konusabschnitt (66) enthält, sich der erste Konusabschnitt (66) in der zweiten Achsenrichtung (Ax2) zwischen dem ersten Wellenabschnitt (64) und dem zweiten Wellenabschnitt (65) befindet, und
ein Durchmesser des ersten Konusabschnitts (66) sich von dem zweiten Wellenabschnitt (65) auf den ersten Wellenabschnitt (64) zu verringert.

11. Motorrad (1) nach einem der Ansprüche 1 bis 10, wobei der erste Wellenabschnitt (64) in der zweiten Achsenrichtung (Ax2) länger ist als der Press-Abschnitt (63).

12. Motorrad (1) nach einem der Ansprüche 1 bis 11, wobei
die Löse-Welle (54) einen zweiten Konusabschnitt (67) enthält, sich der zweite Konusabschnitt (67) in der zweiten Achsenrichtung (Ax2) zwischen dem ersten Wellenabschnitt (64) und dem zweiten Wellenabschnitt (63) befindet, und
ein Durchmesser des zweiten Konusabschnitts (67) sich von dem Press-Abschnitt (63) auf den ersten Wellenabschnitt (64) zu verringert.

13. Motorrad (1) nach einem der Ansprüche 1 bis 12, wobei eine Gesamtzahl der ersten Reibscheibe (23a, 23b, 23c) und der zweiten Reibscheibe (25a, 25b) fünf oder weniger beträgt.

14. Motorrad (1) nach einem der Ansprüche 1 bis 13, das des Weiteren umfasst:
einen Fahrzeug-Karosserierahmen (2), der ein Steuerrohr (6) enthält;
einen Motor (5), der von dem Fahrzeug-Karosserierahmen (2) getragen wird;
eine Lenkwelle (10), die in das Steuerrohr (6) eingesetzt ist;
ein Griffelement (13), das mit einem oberen Abschnitt der Lenkwelle (10) gekoppelt ist;
eine Vorderradgabel (11), die mit einem unteren Abschnitt der Lenkwelle (10) gekoppelt ist;
ein Vorderrad (12), das vor dem Motor (5) angeordnet ist, wobei das Vorderrad (12) über die Vorderradgabel (11) drehbar gelagert ist;
eine Hinterradschwinge (8), die über den Motor (5) oder den Fahrzeug-Karosserierahmen (2) schwenkbar gelagert ist; sowie
ein Hinterrad (9), das hinter dem Motor (5) angeordnet ist, wobei das Hinterrad (9) über die Hinterradschwinge (8) drehbar gelagert ist.

15. Motorrad (1) nach Anspruch 14, wobei das Kupplungs-Betätigungselement (16) ein Kupplungshebel ist, der an dem Griffelement (13) angebracht ist.

## Revendications

1. Motocyclette (1) configurée pour prendre un virage en prenant de la gite, la motocyclette (1) comprenant :
un pignon d'entraînement (21),
un carter (22) couplé au pignon d'entraînement (21),
un premier plateau de friction (23a, 23b, 23c) couplé au carter (22),
un ensemble interne d'embrayage (24) logé dans le carter (22), l'ensemble interne d'embrayage (24) incluant une première partie de plateau (34) et une seconde partie de plateau (41), la seconde partie de plateau (41) étant mobile dans la direction d'un premier axe (Ax1) par rapport à la première partie de plateau (34),
un second plateau de friction (25a, 25b) disposé conjointement avec le premier plateau de friction (23a, 23b, 23c) entre la première partie de plateau (34) et la seconde partie de plateau (41), le second plateau de friction (25a, 25b) étant couplé à l'ensemble interne d'embrayage (24),
un élément de contrainte (26) sollicitant la seconde partie de plateau (41) vers la première partie de plateau (34) de sorte à ce que le premier plateau de friction (23a, 23b, 23c) et le second plateau de friction (25a, 25b) soient pressés en contact l'un avec l'autre,
un arbre principal (27) couplé à l'ensemble interne d'embrayage (24),
un mécanisme d'assistance (29) augmentant la force de contact par pression entre le premier plateau de friction (23a, 23b, 23c) et le second plateau de friction (25a, 25b) lorsque l'arbre principal (27) est accéléré en rotation,
un élément de manœuvre d'embrayage (16) disposé pour pouvoir être manœuvré par un pilote, et
un mécanisme de libération (28) déplaçant la seconde partie de plateau (41) dans une direction de séparation par rapport à la première partie de plateau (34) en réponse à la manœuvre de l'élément de manœuvre d'embrayage (16), le mécanisme d'assistance (29) incluant :
un premier élément de came (71a, 71b, 71c) couplé à l'arbre principal (27), le premier élément de came (71a, 71b, 71c) incluant une première pente, la première pente penchant par rapport à la direction de premier axe (Ax1), et
un second élément de came (72a, 72b, 72c) couplé à la seconde partie de plateau (41), le second élément de came (72a, 72b, 72c) incluant une seconde pente, la seconde pente penchant dans une direction identique à celle de la première pente,
la première pente est configurée pour presser la seconde pente de sorte à ce que le second élément de came (72a, 72b, 72c) soit déplacé dans la direction de premier axe (Ax1) lorsque l'arbre principal (27) est accéléré en rotation,
la seconde partie de plateau (41) est configurée pour se déplacer vers la première partie de plateau (34) conjointement avec le mouvement du second élément de came (72a, 72b, 72c) dans la direction de premier axe (Ax1),
le mécanisme de libération (28) inclut :
une tige de poussée (51) s'étendant dans la direction de premier axe (Ax1), la tige de poussée (51) étant couplée à la seconde partie de plateau (41), la tige de poussée (51) étant disposée à l'intérieur de l'arbre principal (27),
**caractérisée en ce que**
le mécanisme de libération (28) inclut en outre :
un arbre de libération (54) s'étendant dans la direction d'un second axe (Ax2), la direction de second axe (Ax2) coupant la tige de poussée (51), et
un élément de couplage (55) accouplant l'arbre de libération (54) et l'élément de manœuvre d'embrayage (16), où
l'arbre de libération (54) est configuré pour tourner en réponse à la manœuvre de l'élément de manœuvre d'embrayage (16) de sorte à déplacer la tige de poussée (51) dans la direction de premier axe (Ax1), et
l'arbre de libération (54) inclut :
un organe de raccordement (61) auquel est couplé l'élément de couplage (55),
un organe de pressage (63) qui est configuré pour presser la tige de poussée (51) lorsqu'il est en contact avec la tige de poussée (51), et
une première partie d'arbre (64) qui est plus mince que l'organe de raccordement (61), la première partie d'arbre (64) étant située entre l'organe de raccordement (61) et l'organe de pressage (63) dans la direction de second axe (Ax2).

2. Motocyclette (1) selon la revendication 1, dans laquelle le diamètre de la première partie d'arbre (64) est inférieur ou égal à 90 % du diamètre de l'organe de raccordement (61).

3. Motocyclette (1) selon la revendication 1 ou la revendication 2, dans laquelle le diamètre de la première partie d'arbre (64) est supérieur ou égal à 50 % du diamètre de l'organe de raccordement (61).

4. Motocyclette (1) selon l'une quelconque des revendications 1 à 3, dans laquelle la première partie d'arbre (64) est plus mince que l'organe de pressage (63).

5. Motocyclette (1) selon la revendication 4, dans laquelle le diamètre de la première partie d'arbre (64) est inférieur ou égal à 90 % du diamètre de l'organe de pressage (63) .

6. Motocyclette (1) selon la revendication 4 ou la revendication 5, dans laquelle le diamètre de la première partie d'arbre (64) est supérieur ou égal à 50 % du diamètre de l'organe de pressage (63).

7. Motocyclette (1) selon l'une quelconque des revendications 1 à 6, comprenant en outre :
un élément de support (56) soutenant l'arbre de libération (54), et
un palier (57) disposé entre l'élément de support (56) et l'arbre de libération (54),
dans laquelle
l'arbre de libération (54) inclut en outre une seconde partie d'arbre (65), la seconde partie d'arbre (65) étant située entre l'organe de raccordement (61) et la première partie d'arbre (64) dans la direction de second axe (Ax2),
la seconde partie d'arbre (65) est supportée tout en pouvant tourner par le palier (57), et
la première partie d'arbre (64) est plus mince que la seconde partie d'arbre (65).

8. Motocyclette (1) selon la revendication 7, dans laquelle le diamètre de la première partie d'arbre (64) est inférieur ou égal à 90 % du diamètre de la seconde partie d'arbre (65).

9. Motocyclette (1) selon la revendication 7 ou la revendication 8, dans laquelle le diamètre de la première partie d'arbre (64) est supérieur ou égal à 50 % du diamètre de la seconde partie d'arbre (65)

10. Motocyclette (1) selon l'une quelconque des revendications 7 à 9, dans laquelle :
l'arbre de libération (54) inclut une première partie en chanfrein (66), la première partie en chanfrein (66) étant située entre la première partie d'arbre (64) et la seconde partie d'arbre (65) dans la direction de second axe (Ax2), et
le diamètre de la première partie en chanfrein (66) se réduit depuis la seconde partie d'arbre (65) jusqu'à la première partie d'arbre (64)

11. Motocyclette (1) selon l'une quelconque des revendications 1 à 10, dans lequel la première partie d'arbre (64) est plus longue que l'organe de pressage (63) dans la direction de second axe (Ax2).

12. Motocyclette (1) selon l'une quelconque des revendications 1 à 11, dans laquelle :
l'arbre de libération (54) inclut une seconde partie en chanfrein (67), la seconde partie en chanfrein (67) étant située entre la première partie d'arbre (64) et l'organe de pressage (63) dans la direction de second axe (Ax2), et
le diamètre de la seconde partie en chanfrein (67) se réduit depuis l'organe de pressage (63) jusqu'à la première partie d'arbre (64).

13. Motocyclette (1) selon l'une quelconque des revendications 1 à 12, dans laquelle le nombre total de premiers plateaux de friction (23a, 23b, 23c) et de seconds plateaux de friction (25a, 25b) est inférieur ou égal à cinq.

14. Motocyclette (1) selon l'une quelconque des revendications 1 à 13, comprenant en outre :
un cadre de véhicule (2) incluant un tube de fourche (6),
un moteur (5) supporté par le cadre de véhicule (2),
une colonne de direction (10) insérée dans le tube de fourche (6),
un élément de poignée (13) couplé à la partie supérieure de la colonne de direction (10),
une fourche avant (11) couplée à la partie inférieure de la colonne de direction (10),
une roue avant (12) disposée en avant du moteur (5), la roue avant (12) étant supportée tout en pouvant tourner par la fourche avant (11),
un bras arrière (8) supporté tout en pouvant pivoter par le moteur (5) ou par le cadre de véhicule (2), et
une roue arrière (9) disposée derrière le moteur (5), la roue arrière (9) étant supportée tout en pouvant tourner par le bras arrière (8).

15. Motocyclette (1) selon la revendication 14, dans laquelle l'élément de manœuvre d'embrayage (16) est un levier d'embrayage fixé à l'élément de poignée (13).
